# EUROPÄISCHE PATENTSCHRIFT

(11) **EP 4 114 883 B1**
(45) Veröffentlichungstag und Bekanntmachung des Hinweises auf die Patenterteilung: **22.07.2026**
(21) Anmeldenummer: 21707716.3
(22) Anmeldetag: 01.03.2021
(51) Int. Cl.: C08G 18/80

(54) **NICHT-IONISCH HYDROPHILIERTE VERNETZERDISPERSION MIT THERMOLATENT GEBUNDENEN URETHAN/HARNSTOFFGRUPPEN**
NONIONICALLY HYDROPHILICIZED CROSSLINKER DISPERSION WITH THERMOLATENTLY BONDED URETHANE / UREA GROUPS
DISPERSION DE RÉTICULANT HYDROPHILISÉE NON IONIQUE AYANT DES GROUPES URÉTHANE/URÉE LIÉS THERMOLATANTS

(30) Priorität: 05.03.2020 EP 20161144
(43) Veröffentlichungstag der Anmeldung: 11.01.2023
(73) Patentinhaber: Covestro Deutschland AG, 51373 Leverkusen (DE)
(72) Erfinder: DOERR, Sebastian, 40593 Düsseldorf (DE); JANSSEN, Petra, 47647 Kerken (DE); GIPPERICH, Ingo, 51373 Leverkusen (DE)
(74) Vertreter: Levpat
(86) Internationale Anmeldenummer: PCT/EP2021/054956
(87) Internationale Veröffentlichungsnummer: WO 2021/175747

(56) Entgegenhaltungen:
- DE-A1- 102006 038 941
- US-A1- 2019 315 910

## Beschreibung

Die vorliegende Erfindung betrifft ein Verfahren zur Herstellung mindestens eines blockierten Polyisocyanats, umfassend die folgenden Schritte (A) Umsetzen mindestens eines Polyisocyanats mit mindestens einem thermisch abspaltbaren Blockierungsmittel, um mindestens ein teilweise blockiertes Polyisocyanat zu erhalten, (B) Umsetzen des mindestens einen teilweise blockierten Polyisocyanats aus Schritt (A) mit mindestens einem nichtionischen Hydrophilierungsmittel, um ein Zwischenprodukt zu erhalten, (C) Umsetzen des in Schritt (B) erhaltenen Zwischenprodukts mit mindestens einem thermisch abspaltbaren Blockierungsmittel, um das mindestens eine blockierte Polyisocyanat zu erhalten, D) Dispergieren des in Schritt (C) erhaltenen mindestens einen blockierten Polyisocyanats in Wasser, ein entsprechend erhaltenes blockiertes Polyisocyanat, die Verwendung dieses blockierten Polyisocyanats zur Herstellung von Beschichtungsmitteln, Klebstoffen, Dichtstoffen oder Elastomeren, entsprechende Beschichtungsmittel, Klebstoffe, Dichtungsstoffe oder Elastomere, sowie Substrate versehen mit Beschichtungen erhältlich unter Verwendung des erfindungsgemäßen mindestens einen blockierten Polyisocyanats. Die Erfindung ist dargelegt im angefügten Anspruchssatz.

In den letzten Jahren stieg die Bedeutung wässriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastung oftmals nicht erreichen.

Auch Wasserlacksysteme, basierend auf wässrigen Polyurethandispersionen, enthalten häufig noch erhebliche Mengen Lösemittel. Die Vermeidung dieser Lösemittel bei Polyurethandispersionen gelingt im Allgemeinen nicht, da die Herstellung entsprechender Dispersionen über Prepolymere oft Lösemittel erfordert oder den Dispersionen oftmals ein sogenanntes Colösemittel (Coaleszenzmittel) zugesetzt werden muss, um ein Herabsetzen der Mindestfilmbildungs-temperatur zu erreichen. Dies gewährleistet, dass bei der Verfilmung der Beschichtungsmittel schon bei oder unter Raumtemperatur genügend harte Schichten gebildet werden. Auch die Lagerstabilität der Polyurethan-Dispersionen und der Lackformulierungen ist ohne Lösemittel häufig nicht gegeben. Beispielsweise wird das Lösemittel NMP (N-Methylpyrrolidon) im Bereich der wässrigen Dispersionen und Lacke noch teilweise verwendet. Ein Beispiel sind die Carbonsäurehydrophilierten Polyisocyanat-Vernetzerdispersionen mit Dimethylpyrazol-blockierten Isocyanatgruppen, die in EP-A 0 942 023 beschrieben sind. Diese Vernetzerdispersionen, sowie die daraus hergestellten Lacke enthalten NMP als Colösemittel.

Eine colöserfreie Herstellung des in EP-A 0 942 023 beschriebenen, DMP-blockierten Polyisocyanatvernetzers durch Verzicht auf das Lösemittel ist aus Viskositätsgründen nicht möglich.

Die in WO 1997/012924 beschriebenen nichtionisch-hydrophilierten Polyisocyanat-Vernetzer-Dispersionen mit pyrazolisch blockierten Isocyanatgruppen enthalten als Colösemittel ca. 7 Gew.-% Butylglykol. Dies zeichnet sich ähnlich wie NMP durch einen verhältnismäßig hohen Siedepunkt aus. Eine Abtrennung zur Herstellung lösemittelfreier, wässriger Dispersionen ist nicht möglich.

In DE 19914885 werden Polyurethandispersionen mit Dimethylpyrazol-blockierten Isocyanatgruppen zur Herstellung von Glasfaserschlichten beschrieben. Diese Dispersionen werden unter Verwendung eines organischen Lösemittels, das nach dem Dispergieren in Wasser destillativ wieder aus der Dispersion entfernt wird, hergestellt.

In DE 3613492 wird ein Acetonverfahren zur Herstellung colöserfreier Polyurethan-Polyharnstoff-Dispersionen beschrieben. Das Prepolymer, welches in diesem Fall nicht blockiert ist, wird in einer 20 bis 50 gew.-prozentigen Lösung in einem flüchtigen organischen Lösemittel, wie z.B. Aceton, hergestellt und das Lösemittel nach Dispergierung in Wasser destillativ entfernt.

Der Ersatz von NMP im Verfahren gemäß EP-A 0 942 023 durch Aceton in Mengen von 50 oder 62 Gew.-% wie in DE 19914885, führt zu DMP-blockierten Polyisocyanat-Vernetzern, die allerdings nicht lagerstabil sind.

DE 10 2006 025313 A1 offenbart ein Verfahren zur Herstellung von wässrigen, lösemittelfreien Polyurethan-Vernetzer-Dispersionen mit Pyrazol-blockierten Isocyanatgruppen. Die blockierten Polyisocyanate werden gemäß diesem Verfahren dadurch erhalten, dass das Polyisocyanat mit einem thermisch abspaltbaren Blockierungsreagenz, gefolgt von einer Hydroxycarbonsäure und einer di- oder polyfunktionellen Kettenverlängerungskomponente umgesetzt wird. Die so erhaltenen wässrigen Dispersionen lassen sich gut für die Herstellung lösemittelfester Einbrennlacke einsetzen, weisen aber nur eine begrenzte Stabilität in einigen Formulierungen auf.

US 2019/0315910 A1 betrifft ein blockiertes Isocyanat, eine Beschichtungszusammensetzung und eine Klebstoffzusammensetzung, die das blockierte Isocyanat enthalten, sowie Gegenstände, in denen die Beschichtungszusammensetzung und die Klebstoffzusammensetzung verwendet werden.

Aufgabe der vorliegenden Erfindung war es daher ein Verfahren zur Herstellung eines blockierten Polyisocyanats und einer wässrigen Dispersion enthaltend das blockierte Polyisocyanat bereitzustellen, welches die Nachteile der Verfahren des Standes der Technik vermeidet, und eine wässrige Dispersion zugänglich macht, die eine besonders hohe Lagerstabilität aufweist sowie den Einsatz in einer möglichst breiten Vielfalt an Formulierungen ermöglicht.

Diese Aufgaben werden gelöst durch das erfindungsgemäße Verfahren zur Herstellung mindestens eines blockierten Polyisocyanats, umfassend die folgenden Schritte
(A) Umsetzen mindestens eines Polyisocyanats mit mindestens einem thermisch abspaltbaren Blockierungsmittels ausgewählt aus der Gruppe bestehend aus 1H-Pyrazolen wie 3,5-Dimethylpyrazol, Lactamen wie Caprolactam, Ketoximen wie Butanonoxim, Acetonoxim, Methylethylketoxim oder Cyclohexanonoxim, Aminen wie *N*-tert.-Butyl-benzylamin oder Diisopropylamin, bzw. deren Gemische, um mindestens ein teilweise blockiertes Polyisocyanat zu erhalten,
(B) Umsetzen des mindestens einen teilweise blockierten Polyisocyanats aus Schritt (A) mit mindestens einem nichtionischen Hydrophilierungsmittel, um ein Zwischenprodukt zu erhalten,
(C) Umsetzen des in Schritt (B) erhaltenen Zwischenprodukts mit mindestens einem thermisch abspaltbaren Blockierungsmittel ausgewählt aus der Gruppe bestehend aus 1H-Pyrazolen wie 3,5-Dimethylpyrazol, Lactamen wie Caprolactam, Ketoximen wie Butanonoxim, Acetonoxim, Methylethylketoxim oder Cyclohexanonoxim, Aminen wie *N*-tert.-Butyl-benzylamin oder Diisopropylamin, bzw. deren Gemische, um das mindestens eine blockierte Polyisocyanat zu erhalten,
(D) Dispergieren des in Schritt (C) erhaltenen mindestens einen blockierten Polyisocyanats in Wasser.

Die Aufgaben werden auch gelöst durch das erfindungsgemäße blockierte Polyisocyanat, erhältlich nach dem erfindungsgemäßen Verfahren.

Die Aufgaben werden auch gelöst durch die erfindungsgemäße Verwendung des erfindungsgemäßen blockierten Polyisocyanats zur Herstellung von Beschichtungsmitteln, Klebstoffen, Dichtstoffen oder Elastomeren.

Die Aufgaben werden auch gelöst durch erfindungsgemäße Beschichtungsmittel, Klebstoffe, Dichtungsstoffe oder Elastomere enthaltend mindestens ein erfindungsgemäßes blockiertes Polyisocyanat.

Die Aufgaben werden auch gelöst durch das erfindungsgemäße Substrat versehen mit Beschichtungen erhältlich unter Verwendung des erfindungsgemäßen mindestens einen blockierten Polyisocyanats.

Die vorliegende Erfindung betrifft das oben genannte Verfahren zur Herstellung mindestens eines blockierten Polyisocyanats. Die einzelnen Schritte des erfindungsgemäßen Verfahrens werden im Folgenden detailliert beschrieben. Bevorzugt erfolgen die genannten erfindungsgemäßen Verfahrensschritte in der Reihenfolge (A), gefolgt von (B), gefolgt von (C), gegebenenfalls gefolgt von (D).

Schritt (A) des erfindungsgemäßen Verfahrens umfasst das Umsetzen mindestens eines Polyisocyanats mit mindestens einem thermisch abspaltbaren Blockierungsmittels, um mindestens ein teilweise blockiertes Polyisocyanat zu erhalten.

Erfindungsgemäß wird mindestens ein Polyisocyanat eingesetzt. Erfindungsgemäß ist es bevorzugt, dass ein im Wesentlichen einheitliches Polyisocyanat eingesetzt wird. Erfindungsgemäß ist es auch möglich, dass eine Mischung enthaltend zwei, drei oder mehr unterschiedliche Polyisocyanate eingesetzt wird.

Als erfindungsgemäß geeignete Polyisocyanate können die dem Fachmann an sich bekannten NCOfunktionellen Verbindungen einer Funktionalität von bevorzugt 2 oder mehr eingesetzt werden. Dies sind erfindungsgemäß bevorzugt aliphatische, cycloaliphatische, araliphatische und/oder aromatische Di- oder Triisocyanate sowie deren höhermolekulare Folgeprodukte, insbesondere mit lminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen, die weiter bevorzugt zwei oder mehr freie NCO-Gruppen aufweisen.

Erfindungsgemäß bevorzugte Di- oder Triisocyanate sind beispielsweise Tetramethylendiisocyanat, Cyclohexan-1,3- und 1,4-diisocyanat, Hexamethylendiisocyanat (HDI), 1-Isocyanato-3,3,5-trimethyl-5-isocyanatomethyl-cyclohexan (lsophorondiisocyanat, IPDI), Methylen-bis-(4-isocyanatocyclohexan), Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat, Naphtylen-1,5-diisocyanat, 4-lsocyanatomethyl-1,8-octandiisocyanat (Nonantriisocyanat, Triisocyanatononan, TIN), Pentamethylendiisocyanat (PDI) und/oder 1,6,11-Undecantriisocyanat sowie deren beliebige Mischungen, ggf. in Mischung mit weiteren Di-, Tri- und/oder Polyisocyanaten.

Die erfindungsgemäß bevorzugt eingesetzten Polyisocyanate haben typischerweise einen Isocyanatgehalt von 0,5 bis 50 Gew.-%, bevorzugt 3 bis 30 Gew.-%, besonders bevorzugt 5 bis 25 Gew.-%.

Erfindungsgemäß bevorzugt werden im vorliegenden Verfahren die höhermolekularen, d. h. aus Di- oder Triisocyanate unter Umsetzung eines Teils der Isocyanatgruppen abgeleiteten Verbindungen mit lsocyanurat-, Urethan-, Allophanat-, Biuret-, lminooxadiazintrion-, Oxadiazintrion- und/oder Uretdiongruppen auf Basis aliphatischer und/oder cycloaliphatischer Diisocyanate eingesetzt.

Besonders bevorzugt werden im erfindungsgemäßen Verfahren die höhermolekularen Verbindungen mit Biuret-, lminooxadiazindion-, lsocyanurat- und/oder Uretdiongruppen auf Basis von Hexamethylendiisocyanat, lsophorondiisocyanat und/oder 4,4'-Diisocyanatodicyclohexylmethan eingesetzt.

In Schritt (A) des erfindungsgemäßen Verfahrens wird das mindestens eine Polyisocyanat mit mindestens einem thermisch abspaltbaren Blockierungsmittel umgesetzt.

Erfindungsgemäß wesentlich ist, dass in einem ersten Schritt das mindestens eine Polyisocyanat mit mindestens einem ersten thermisch abspaltbaren Blockierungsmittel umgesetzt wird, wobei erfindungsgemäß bevorzugt in diesem Schritt (A) nicht alle vorhandenen NCO-Gruppen blockiert werden. Im Allgemeinen wird das mindestens eine thermisch abspaltbare Blockierungsmittel in Schritt (A) in einer Menge zugegeben, die ausreicht, um 10 bis 50 mol-%, bevorzugt 20 bis 40 mol- %, der vorhandenen Isocyanatgruppen zu blockieren.

Erfindungsgemäß bevorzugt werden in Schritt (A) des erfindungsgemäßen Verfahrens 10 bis 50 mol- %, besonders bevorzugt 20 bis 40 mol-%, der vorhandenen NCO-Gruppen mit dem mindestens einen thermisch abspaltbaren Blockierungsmittel umgesetzt.

Erfindungsgemäß kann das in Schritt (A) eingesetzte mindestens eine thermisch abspaltbare Blockierungsmittel im Allgemeinen jedes dem Fachmann als geeignet erscheinende Reagenz sein.

Ein erfindungsgemäß bevorzugtes Beispiel für 1H-Pyrazole ist 3,5-Dimethylpyrazol oder Mischungen enthaltend 3,5-Dimethylpyrazol.

Erfindungsgemäß bevorzugte Beispiele für Ketoxime sind ausgewählt aus der Gruppe bestehend aus Butanonoxim, Acetonoxim, Methylethylketoxim und Mischungen davon.

Ein erfindungsgemäß bevorzugtes Beispiel für Lactame ist Caprolactam oder Mischungen enthaltend Caprolactam.

Besonders bevorzugt wird in Schritt (A) des erfindungsgemäßen Verfahrens mindestens ein thermisch abspaltbares Blockierungsmittel ausgewählt aus der Gruppe bestehend aus Caprolactam, 3,5-Dimethylpyrazol, Methylethylketoxim und Mischungen davon eingesetzt, ganz besonders bevorzugt wird 3,5-Dimethylpyrazol eingesetzt.

Das in Schritt (A) erfindungsgemäß eingesetzte mindestens eine thermisch abspaltbare Blockierungsmittel wird bevorzugt so gewählt, dass die Abspaltung aus dem blockierten Polyisocyanat beispielsweise bei einer Temperatur unterhalb 200 °C, bevorzugt 100 bis 170 °C, besonders bevorzugt 110 bis 140 °C, erfolgt. Ein Beispiel für die Ermittlung der Abspalttemperatur ist eine thermogravimetrische Analyse, bei der eine vorgetrocknete Probe unter einem Stickstoffstrom mit einer Rate von 10K/min aufgeheizt wird. Vorzugsweise gelten die genannten Temperaturbereiche in Abwesenheit von die Abspaltungstemperatur herabsetzenden Katalysatoren sowie in Abwesenheit von reaktiven Nucleophilen, wie beispielsweise primären oder sekundären Aminen.

Schritt (A) des erfindungsgemäßen Verfahrens kann im Allgemeinen bei allen dem Fachmann als geeignet erscheinenden Reaktionsbedingungen durchgeführt werden.

Schritt (A) des erfindungsgemäßen Verfahrens wird bevorzugt bei einer Temperatur von 50 bis 120 °C, besonders bevorzugt 60 bis 100 °C, durchgeführt.

Schritt (A) des erfindungsgemäßen Verfahrens kann in allen dem Fachmann als geeignet erscheinenden Apparaturen erfolgen, beispielsweise in einer Rührapparatur.

Das mindestens eine Polyisocyanat wird dabei bevorzugt in Substanz vorgelegt. Es ist auch möglich Schritt (A) des erfindungsgemäßen Verfahrens in einem Lösungsmittel, beispielsweise Aceton, durchzuführen. Zu dem mindestens einen Polyisocyanat wird dann das mindestens eine thermisch abspaltbare Blockierungsmittel, bevorzugt in Substanz, zugegeben.

Im Allgemeinen wird das mindestens eine thermisch abspaltbare Blockierungsmittel in Schritt (A) in einer Menge zugegeben, die ausreicht, um 5 bis 80 mol-%, bevorzugt 20 bis 50 mol-%, der vorhandenen Isocyanatgruppen zu blockieren.

Schritt (A) des erfindungsgemäßen Verfahrens wir bevorzugt so lange durchgeführt, bis das zugegebene Blockierungsmittel vollständig abreagiert hat. Der theoretische Isocyanatgruppen-Gehalt nach Schritt (A) des erfindungsgemäßen Verfahrens beträgt im Allgemeinen 10 bis 30 Gew.- %, bevorzugt 12 bis 20 Gew.-%.

Erfindungsgemäß kann das in Schritt (A) erhaltene Reaktionsprodukt dem Fachmann bekannten Aufarbeitungs- oder Reinigungsschritten unterworfen werden. Erfindungsgemäß bevorzugt wird das in Schritt (A) erhaltene Reaktionsgemisch direkt weiter gemäß Schritt (B) behandelt.

Schritt (B) des erfindungsgemäßen Verfahrens umfasst das Umsetzen des mindestens einen teilweise blockierten Polyisocyanats aus Schritt (A) mit mindestens einem nichtionischen Hydrophilierungsmittel, um ein Zwischenprodukt zu erhalten.

Erfindungsgemäß bevorzugt wird in Schritt (B) das aus Schritt (A) erhaltene Produkt umgesetzt. Weiter bevorzugt erfolgt Schritt (B) in der gleichen Apparatur, in der auch Schritt (A) erfolgt ist.

Es wird in Schritt (B) mindestens ein nichtionisches Hydrophilierungsmittel eingesetzt. Erfindungsgemäß können in Schritt (B) des erfindungsgemäßen Verfahrens im Allgemeinen alle dem Fachmann als geeignet erscheinenden nichtionischen Hydrophilierungsmittel eingesetzt werden. Erfindungsgemäß bedeutet "nichtionisch", dass das Hydrophilierungsmittel im Wesentlichen keine ionischen oder ionogenen Gruppen aufweist. Bevorzugt bedeutet es, dass das erfindungsgemäß eingesetzte nichtionische Hydrophilierungsmittel weder anionische noch kationische Gruppen aufweist, d.h. dass deren Menge < 1 Equivalent Ladung pro Gramm des Hydrophilierungsmittels beträgt. Analoges gilt für ionogene Gruppen, also Gruppen, die sich leicht in geladene Spezies überführen lassen, beispielsweise Carbonsäuregruppen.

Erfindungsgemäß bevorzugt ist das mindestens eine nichtionische Hydrophilierungsmittel ausgewählt aus der Gruppe der Polyoxyalkylenether, die mindestens eine Hydroxy- oder Aminogruppe enthalten.

Diese sind in an sich bekannter Weise durch Alkoxylierung geeigneter Startermoleküle zugänglich. Geeignete Startermoleküle sind beispielsweise gesättigte Monoalkohole wie Methanol, Ethanol, n-Propanol, Isopropanol, n-Butanol, lsobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1 H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bevorzugt ist die blockweise Addition von Ethylenoxid und Propylenoxid an den Starter.

Bei den Polyalkylenoxidpolyethern handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol- % Ethylenoxid- und maximal 60 mol-% Propylenoxideinheiten aufweisen.

Die bevorzugt eingesetzten nichtionischen Hydrophilierungsmittel weisen bevorzugt eine zahlenmittlere Molmasse von 300 bis 4000 g/mol bevorzugt 400 bis 2500 g/mol, auf.

Ganz besonders bevorzugt wird als nichtionisches Hydrophilierungsmittel Methoxypolyethylenglykol eingesetzt, ganz besonders bevorzugt Methoxypolyethylenglykol mit einer zahlenmittleren Molmasse von 350 bis 750 g/mol.

Schritt (B) des erfindungsgemäßen Verfahrens wird bevorzugt bei einer Temperatur von 50 bis 120 °C, besonders bevorzugt 60 bis 100 °C, durchgeführt.

Schritt (B) des erfindungsgemäßen Verfahrens wir bevorzugt so lange durchgeführt, bis das zugegebene Hydrophilierungsmittel vollständig abreagiert hat. Der theoretische Isocyanatgruppen-Gehalt nach Schritt (B) des erfindungsgemäßen Verfahrens beträgt im Allgemeinen 3 bis 20 Gew.- %, bevorzugt 5 bis 15 Gew.-%.

Erfindungsgemäß kann das in Schritt (B) erhaltene Zwischenprodukt dem Fachmann bekannten Aufarbeitungs- oder Reinigungsschritten unterworfen werden. Erfindungsgemäß bevorzugt wird das in Schritt (B) erhaltene Reaktionsgemisch direkt weiter gemäß Schritt (C) behandelt.

In Schritt (B) des erfindungsgemäßen Verfahrens wird demnach bevorzugt mindestens ein Polyisocyanat erhalten, dessen Isocyanatgruppen zu 20 bis 90 mol-%, bevorzugt 30 bis 80 mol-%, blockiert bzw. von einem nichtionischen Hydrophilierungsmittel besetzt sind.

Zur Beschleunigung der Reaktionsschritte, insbesondere der Reaktionsschritte (A), (B) und/oder (C), können dem Reaktionsgemisch auch Katalysatoren zugesetzt werden. Geeignete Katalysatoren sind die aus der Isocyanat-Chemie bekannten Systeme, beispielsweise tertiäre Amine, Zinn-, Zink-, oder Wismutverbindungen oder basische Salze.

Schritt (C) des erfindungsgemäßen Verfahrens umfasst das Umsetzen des in Schritt (B) erhaltenen Zwischenprodukts mit mindestens einem thermisch abspaltbaren Blockierungsmittel, um das mindestens eine blockierte Polyisocyanat zu erhalten.

In Schritt (C) des erfindungsgemäßen Verfahrens wird das in Schritt (B) erhaltene Zwischenprodukt mit mindestens einem thermisch abspaltbaren Blockierungsmittel umgesetzt.

Es ist erfindungsgemäß möglich, dass die in Schritt (A) und Schritt (C) eingesetzten thermisch abspaltbaren Blockierungsmittel identisch sind. Es ist erfindungsgemäß auch möglich, dass die in Schritt (A) und Schritt (C) eingesetzten thermisch abspaltbaren Blockierungsmittel nicht identisch, sondern unterschiedlich, sind.

Bevorzugt betrifft die vorliegende Erfindung das erfindungsgemäße Verfahren, wobei das in Schritt (A) eingesetzte mindestens eine thermisch abspaltbare Blockierungsmittel und das in Schritt (C) eingesetzte mindestens eine thermisch abspaltbare Blockierungsmittel identisch sind.

Bevorzugte Beispiele der genannten Verbindungsklassen sind weiter oben zu Schritt (A) genannt.

Besonders bevorzugt wird in Schritt (C) des erfindungsgemäßen Verfahrens mindestens ein thermisch abspaltbares Blockierungsmittel ausgewählt aus der Gruppe bestehend aus Caprolactam, 3,5-Dimethylpyrazol, Methylethylketoxim und Mischungen davon eingesetzt, ganz besonders bevorzugt wird 3,5-Dimethylpyrazol eingesetzt.

Das in Schritt (C) erfindungsgemäß eingesetzte mindestens eine thermisch abspaltbare Blockierungsmittel wird bevorzugt so gewählt, dass die Abspaltung aus dem blockierten Polyisocyanat beispielsweise bei einer Temperatur unterhalb 200 °C, bevorzugt 100 bis 170 °C, besonders bevorzugt 110 bis 140 °C, erfolgt. Vorzugsweise gelten die genannten Temperaturbereiche in Abwesenheit von die Abspaltungstemperatur herabsetzenden Katalysatoren sowie in Abwesenheit von reaktiven Nucleophilen, wie beispielsweise primären oder sekundären Aminen.

Schritt (C) des erfindungsgemäßen Verfahrens kann im Allgemeinen bei allen dem Fachmann als geeignet erscheinenden Reaktionsbedingungen durchgeführt werden.

Schritt (C) des erfindungsgemäßen Verfahrens wird bevorzugt bei einer Temperatur von 50 bis 120 °C, besonders bevorzugt 60 bis 100 °C, durchgeführt.

Schritt (C) des erfindungsgemäßen Verfahrens kann in allen dem Fachmann als geeignet erscheinenden Apparaturen erfolgen, bevorzugt erfolgt Schritt (C), in dem gleichen Reaktor, in dem auch die Schritte (A) und (B) durchgeführt wurden.

Erfindungsgemäß bevorzugt wird zu dem aus Schritt (B) erhaltenen Zwischenprodukt das mindestens eine thermisch abspaltbare Blockierungsmittel, bevorzugt in Substanz, zugegeben.

Im Allgemeinen wird das mindestens eine thermisch abspaltbare Blockierungsmittel in Schritt (C) in einer Menge zugegeben, die ausreicht, um 95 bis 100 mol-%, bevorzugt 98 bis 100 mol-%, der vor Durchführung des Schrittes (C) vorhandenen Isocyanatgruppen zu blockieren.

In Schritt (C) des erfindungsgemäßen Verfahrens wird demnach bevorzugt mindestens ein Polyisocyanat erhalten, dessen Isocyanatgruppen zu 95 bis 100 mol-%, bevorzugt 98 bis 100 mol- %, blockiert bzw. von einem nichtionischen Hydrophilierungsmittel besetzt sind.

Schritt (C) des erfindungsgemäßen Verfahrens wir bevorzugt so lange durchgeführt, bis das zugegebene Blockierungsmittel vollständig abreagiert hat. Der theoretische Isocyanatgruppen-Gehalt nach Schritt (C) des erfindungsgemäßen Verfahrens beträgt daher im Allgemeinen 0 bis 1 Gew.-%, bevorzugt 0 bis 0,3 Gew.-%. Dieselben bevorzugten Isocyanatgruppen-Gehalt nach Schritt (C) gelten auch für titrimetrisch gemessene Werte.

Erfindungsgemäß kann das in Schritt (C) erhaltene Reaktionsprodukt dem Fachmann bekannten Aufarbeitungs- oder Reinigungsschritten, beispielsweise Filtration und/oder thermische Behandlung, unterworfen werden.

Schritt (D) des erfindungsgemäßen Verfahrens kann nach dem Fachmann bekannten Methoden erfolgen. Bevorzugt wird zu dem in Schritt (C) erhaltenen Reaktionsgemisch Wasser gegeben. Alternativ wird das in Schritt (C) erhaltenen Reaktionsgemisch zu Wasser gegeben.

Schritt (D) des erfindungsgemäßen Verfahrens kann bei allen dem Fachmann bekannten Temperaturen erfolgen. Bevorzugt wird das Wasser bei einer Temperatur im Dispergiergefäß von 5 bis 90 °C, besonders bevorzugt 15 bis 50 °C, hinzugegeben. Weiter bevorzugt wird die so erhaltene Dispersion bei einer Temperatur von 20 bis 80 °C, besonders bevorzugt 30 bis 50 °C, gerührt. Nachrührzeiten vor Filtration oder Abfüllung in Gebinde sind bevorzugt mindestens 30 Minuten und besonders bevorzugt mindestens 2 Stunden.

Es wird in Schritt (D) bevorzugt so viel Wasser hinzugegeben, dass nach Schritt (D) eine wässrige Dispersion erhalten wird, die einen Feststoffgehalt von 20 bis 60 Gew.-%, besonders bevorzugt 30 bis 50 Gew.-%, aufweist.

Die in Schritt (D) erhaltene wässrige Dispersion weist bevorzugt einen pH-Wert von 5 bis 9, besonders bevorzugt 6 bis 8, auf.

Die in Schritt (D) erhaltene wässrige Dispersion weist bevorzugt eine Viskosität von 10 bis 5000 mPa·s, besonders bevorzugt 50 bis 3000 mPa·s, jeweils bestimmt mittels Rotationsviskosimetrie nach DIN 53019-2008 bei 23 °C.

Die in Schritt (D) erhaltene wässrige Dispersion weist bevorzugt eine mittlere Partikelgröße von 10 bis 400 nm, besonders bevorzugt 20 bis 200 nm, jeweils bestimmt mittels Laserkorrelations-Spektroskopie (Gerät: Malvern Zetasizer 1000, Malver Inst. Limited) nach Verdünnung der Probe mit entmineralisiertem Wasser.

Neben den genannten Reaktionsschritten können optional noch weitere Umsetzungen der Isocyanatgruppen erfolgen, beispielsweise durch NCO-reaktive Amine und/oder Alkohole.

Beispielsweise können organische Di- oder Polyamine wie beispielsweise 1,2-Ethylendiamin, 1,2- und 1,3-Diaminopropan, 1,4-Diaminobutan, 1,6-Diaminohexan, Isophorondiamin (IPDA), Isomerengemisch von 2,2,4- und 2,4,4-Trimethylhexamethylendiamin, 2-Methylpentamethylendiamin, Diethylentriamin, 4,4-Diaminodicyclohexylmethan und/oder Dimethylethylendiamin oder Mischungen aus mindestens zwei hiervon eingesetzt werden.

Als weitere Komponente können wahlweise Polyole, insbesondere nicht-polymere Polyole, des genannten Molekulargewichtsbereichs von 62 bis 399 mol/g mit bis zu 20 Kohlenstoffatomen, wie Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin, Pentaerythrit sowie deren beliebige Mischungen untereinander eingesetzt werden.

Beispiele für polymere Polyole sind die in der Polyurethanlacktechnologie an sich bekannten Polyetherpolyole, Polyesterpolyole, Polyacrylatpolyole, Polyurethanpolyole, Polycarbonatpolyole, Polyesterpolyacrylatpolyole, Polyurethanpolyacrylatpolyole, Polyurethanpolyesterpolyole, Polyurethanpolycarbonatpolyole und Polyesterpolycarbonatpolyole.

Geeignete monofunktionelle Verbindungen sind beispielsweise Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmono-propylether, Propylenglykolmonobutylether, Dipropylenglykolmonobutylether, Tripropylenglykolmonobutylether, 2-Ethylhexanol, 1-Octanol, 1-Dodecanol, 1-Hexadecanol.

Beispiele für weitere geeignete Verbindungen sind primäre/sekundäre Amine, wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, Diethanolamin, 3-Amino-1-methylaminopropan, 3-Amino-1-ethylaminopropan, 3-Amino-1-cyclohexylaminopropan, 3-Amino-1- methylaminobutan, 6-Aminohexansäure, Alanin, Asparaginsäure, Glutaminsäure, Glutamin, Glycin, Ethanolamin, 3-Aminopropanol, Neopentanolamin oder Mischungen aus mindestens zwei hiervon.

Beispielsweise können erfindungsgemäß 0,1 bis 10 mol-% der NCO-Gruppen des vorliegenden Polyisocyanates mit weiteren Aminen oder Alkoholen umgesetzt werden. In einer bevorzugten Variante wird mit einem difunktionellen oder trifunktionellen niedermolekularen Alkohol umgesetzt. Erfindungsgemäß bevorzugt wird in einer weiteren Variante keine der genannten, weiteren Komponente eingesetzt.

Das zahlenmittlere Molekulargewicht der erfindungsgemäßen blockierten Polyisocyanat-Dispersionen im Rahmen dieser Anmeldung wird bestimmt durch Gelpermeationschromatographie (GPC) in DMAc (N,N-Dimethylacetamid) als Laufmittel bei 23 °C. Es wird dabei vorgegangen in Anlehnung an DIN 55672-1. Vorzugsweise liegt das gewichtsmittlere Molekulargewicht der erfindungsgemäßen blockierten Polyisocyanate bei 1000 bis 100000 g/mol, besonders bevorzugt 2000 bis 20000 g/mol.

Der Gehalt saurer ionischer und/oder ionogener Gruppen, wie beispielsweise Carbonsäuregruppen, Carboxylatgruppen, Sulfonsäuregruppen oder Sulfonatgruppen, des erfindungsgemäßen blockierten Polyisocyanat ist vorzugsweise niedrig. Besonders bevorzugt sind keine sauren ionischen und/oder ionogenen Gruppen enthalten.

Die vorliegende Erfindung betrifft auch das blockierte Polyisocyanat, erhältlich nach dem erfindungsgemäßen Verfahren. Das blockierte Polyisocyanat, welches nach dem vorliegenden Verfahren erhalten wird, zeichnet sich gegenüber den aus dem Stand der Technik erhaltenen blockierten Polyisocyanaten dadurch aus, das es leichter in eine lagerstabile wässrige Dispersion überführt werden kann. Insbesondere weist das erfindungsgemäß hergestellte blockierte Polyisocyanat in wässriger Dispersion eine mittlere Partikelgröße von 10 bis 400 nm, besonders bevorzugt 20 bis 200 nm, jeweils bestimmt mittels Laserkorrelations-Spektroskopie (Gerät: Malvern Zetasizer 1000, Malver Inst. Limited) nach Verdünnung der Probe mit entmineralisiertem Wasser, auf. Vorzugsweise weist das erfindungsgemäß hergestellte blockierte Polyisocyanat ein Zetapotential von 0 bis -15 V, bevorzugt -0,1 bis -15 V, auf. Zur Bestimmung des Zetapotentials wird eine geringe Menge der Probe mit 1mmolarer Kaliumchloridlösung verdünnt und durch Rühren homogenisiert. Zur Einstellung des pH-Wertes von 8,0 werden verdünnte Salzsäure bzw. Natronlauge verwendet. Anschließend wird das Zetapotential im "ZetaSizer 3000HSA" (Malvern Instruments, Herrenberg, Deutschland) bei 23°C bestimmt.

In einer bevorzugten erfindungsgemäßen Ausführungsform beträgt die Säurezahl der erfindungsgemäßen blockierten Polyisocyanate unter 30 mg KOH/g Polymer, bevorzugt unter 10 mg KOH/g Polymer, ganz bevorzugt unter 5 mg KOH/g Polymer. Die Säurezahl der erfindungsgemäßen blockierten Polyisocyanate beträgt bevorzugt mindestens 0 mg KOH/g Polymer. Die Säurezahl gibt dabei die Masse Kaliumhydroxid in mg an, die zur Neutralisation von 1 g der zu untersuchenden Probe erforderlich ist (Messung nach DIN EN ISO 2114 - Juni 2002). Die neutralisierten Säuren, also die entsprechenden Salze weisen naturgemäß keine oder eine reduzierte Säurezahl auf. Hier ist erfindungsgemäß die Säurezahl der korrespondierenden freien Säure entscheidend.

Bezüglich des erfindungsgemäßen blockierten Polyisocyanates gilt mit Blick auf die allgemeinen und die bevorzugten Ausführungsformen das bezüglich des erfindungsgemäßen Verfahrens Gesagte entsprechend.

Die erfindungsgemäßen blockierten Polyisocyanat-Dispersionen können z.B. zur Herstellung von, bevorzugt einbrennbaren, Beschichtungsmitteln (Einbrennlacken), zur Beschichtung von Substraten, vorzugsweise aus Metallen, mineralischen Stoffen, Glas, Holz oder Kunststoffen verwendet werden. Eine bevorzugtes Ausführungsform umfasst die Beschichtung von Glasfasern, Basaltfasern und Kohlefasern oder resultierenden Erzeugnissen mit Formulierungen enthaltend die erfindungsgemäßen blockierten Polyisocyanat-Dispersionen. Ein besonders bevorzugtes Substrat sind Glasfasern. Hierzu können die erfindungsgemäßen Überzugsmittel durch Streichen, Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 0,01 bis 120 µm liegen. Das Aushärten der getrockneten Filme erfolgt durch Einbrennen im Temperaturbereich von 90 bis 190 °C, bevorzugt 110 bis 180 °C, besonders bevorzugt 120 bis 160 °C. Die Vernetzung kann auch im Wesentlichen oder teilweise im Verlauf des Compoundierens mit einer Kunststoffmatrix geschehen.

Die vorliegende Erfindung betrifft auch die Verwendung des erfindungsgemäßen blockierten Polyisocyanats zur Herstellung von Beschichtungsmitteln, Klebstoffen, Dichtstoffen oder Elastomeren.

Die vorliegende Erfindung betrifft auch Beschichtungsmittel, Klebstoff, Dichtungsstoff oder Elastomer enthaltend mindestens ein erfindungsgemäßes blockiertes Polyisocyanat.

Die vorliegende Erfindung betrifft auch Substrate versehen mit Beschichtungen erhältlich unter Verwendung des mindestens einen erfindungsgemäßen blockierten Polyisocyanats.

Zur Herstellung von Beschichtungsmitteln (Einbrennlacken), von Klebstoffen und von Elastomeren können die erfindungsgemäßen Polyisocyanat-Vernetzerdispersionen mit blockierten Isocyanatgruppen mit mindestens difunktionellen, isocyanatreaktiven Verbindungen z.B. beliebigen Polyolkomponenten, vorzugsweise in Form wässriger Dispersionen, gemischt werden.

Solche Polyolkomponenten können Polyhydroxypolyester, Polyhydroxypolyurethane, Polyhydroxypolyether, Polycarbonat-Diele oder Hydroxylgruppen aufweisende Polymerisate, z.B. die an sich bekannten Polyhydroxypolyacrylate, Polyacrylat-polyurethane und/oder Polyurethanpolyacrylate sein. Diese weisen im Allgemeinen eine Hydroxylzahl von 20 bis 200, vorzugsweise von 50 bis 130 mg KOH/g auf. Die üblicherweise erforderliche hydrophile Modifizierung dieser Polyhydroxylverbindungen zur Herstellung von Dispersionen erfolgt nach an sich bekannten Methoden, wie sie beispielsweise in EP-A-0 157 291, EP-A-0 498 156 oder EP-A-0 427 028 offenbart sind.

Auch eine Mischung mit anderen alkoholreaktiven Verbindungen wie z.B. Aminovernetzerharzen wie beispielsweise Melaminharzen und/oder Harnstoffharzen zur zusätzlichen Vernetzung beim Einbrennen ist möglich.

Die Herstellung der Lacke, Farben, Klebstoffe und anderen Formulierungen aus den erfindungsgemäßen Dispersionen erfolgt nach an sich bekannten Methoden. Außer den blockierten Polyisocyanaten und ggf. Polyolen oder Filmbildnern können den Formulierungen übliche Additive und andere Hilfsstoffe (z.B. Pigmente, Füllstoffe, Verlaufsmittel, Entschäumer, Katalysatoren, Trennmittel, Antistatika) zugesetzt werden.

Die vorliegende Erfindung wird an Hand von Beispielen erläutert.

### Beispiele

Eingesetzte Chemikalien:

| | |
|---|---|
| Desmodur^{®} Ultra N 3300 | Isocyanurat auf Basis von Hexamethylendiisocyanat, Covestro Deutschland AG, Leverkusen, DE |

Die weiteren Chemikalien wurden von Sigma-Aldrich Chemie GmbH, Taufkirchen, DE, bezogen.

Sofern nicht abweichend vermerkt, beziehen sich alle Prozentangaben auf Gewichtsprozent (Gew.- %).

Sofern nicht abweichend vermerkt, wurden alle analytischen Messungen bei einer Temperatur von 23 °C durchgeführt.

Die angegebenen Viskositäten wurden mittels Rotationsviskosimetrie nach DIN 53019-2008 bei 23 °C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909-2007 bestimmt.

Die angegebenen Partikelgrößen wurden mittels Laserkorrelations-Spektroskopie (Gerät: Malvern Zetasizer 1000, Malver Inst. Limited) nach Verdünnung der Probe mit entmineralisiertem Wasser bestimmt.

Die Festkörpergehalte wurden durch Erhitzen einer ausgewogenen Probe auf 120 °C ermittelt. Bei Gewichtskonstanz wurde durch erneutes Auswiegen der Probe der Festkörpergehalt berechnet.

Die Kontrolle auf freie NCO-Gruppen wurde mittels IR-Spektroskopie (Bande bei 2260 cm⁻¹) durchgeführt.

Als Lagertest wurden je 250 ml der Dispersion abgefüllt und sowohl bei Raumtemperatur als auch bei 40 °C gelagert. Es erfolgte eine Sichtkontrolle, ob sich Bodensatz bildete. Proben mit Bodensatz wurden als nicht stabil bewertet.

Zur Bestimmung des Zetapotential wird eine geringe Menge der Probe stark mit 1mmolarer Kaliumchloridlösung verdünnt und durch Rühren homogenisiert. Zur Einstellung des pH-Wertes von 8,0 werden verdünnte Salzsäure bzw. Natronlauge verwendet. Anschließend wird das Zetapotential im "ZetaSizer 3000HSA" (Malvern Instruments, Herrenberg, Deutschland) bei 23°C bestimmt.

Die Säurezahl wird nach DIN EN ISO 2114 - Juni 2002 bestimmt.

### Vergleichsbeispiel 1:

In einer Standard-Rührapparatur wurden 234 g Desmodur^{®} Ultra N 3300 vorgelegt und auf 40 °C aufgeheizt. Anschließend gab man 110,5 g 3,5-Dimethylpyrazol (DMP) portionsweise zu der Schmelze, so dass die Temperatur 75 °C nicht überstieg. Es wurde bei 80 °C gerührt, bis der theoretische Isocyanatgehalt von ca. 0,59 Gew.-% unterschritten wurde. Anschließend wurden 49,5 g Methoxypolyethylenglykol mit einer zahlenmittleren Molmasse von 750 g/mol zugesetzt, und es wurde bei 80 °C gerührt, bis IR-spektroskopisch keine Isocyanatgruppen mehr nachweisbar waren. Dann wurden unter starkem Rühren 591 g entionisiertes Wasser zugegeben und es wurde 180 Minuten bei 40 °C nachgerührt.

Die erhaltene Dispersion hatte nachfolgende Eigenschaften:

| | |
|---|---|
| Feststoffgehalt: | ca. 39,5 Gew.-% |
| pH-Wert: | ca. 5,8 |
| Viskosität | ca. 10 mPa·s |
| Mittlere Partikelgröße (LKS): | 369 nm |

Die Dispersion bildete über Nacht zwei Phasen und war daher für weitere Prüfungen nicht zu verwenden.

### Vergleichsbeispiel 2:

In einer Standard-Rührapparatur wurden 234 g Desmodur^{®} Ultra N 3300 vorgelegt und auf 40 °C aufgeheizt. Anschließend wurden 49,5 g Methoxypolyethylenglykol mit einer zahlenmittleren Molmasse von 750 g/mol zugesetzt und es wurde bei 80 °C gerührt, bis der theoretische Isocyanatgehalt von ca. 16,8 Gew.-% unterschritten wurde. Anschließend gab man 110,5 g 3,5-Dimethylpyrazol (DMP) portionsweise zu der Schmelze, so dass die Temperatur 80 °C nicht überstieg. Es wurde bei 80 °C gerührt, bis IR-spektroskopisch keine Isocyanatgruppen mehr nachweisbar waren. Dann wurden unter starkem Rühren 591 g entionisiertes Wasser zugegeben und es wurde 180 Minuten bei 40 °C nachgerührt.

Die erhaltene Dispersion hatte nachfolgende Eigenschaften:

| | |
|---|---|
| Feststoffgehalt: | ca. 39,8 Gew.-% |
| pH-Wert: | ca. 5,6 |
| Viskosität | ca. 10 mPa·s |
| Mittlere Partikelgröße (LKS): | 343 nm |

Die Dispersion bildete über Nacht zwei Phasen und war daher für weitere Prüfungen nicht zu verwenden.

### Beispiel 3: DMP als Blockierungsmittel

In einer Standard-Rührapparatur wurden 234 g Desmodur^{®} Ultra N 3300 vorgelegt und auf 40 °C aufgeheizt. Anschließend gab man 58,2 g 3,5-Dimethylpyrazol (DMP) portionsweise zu der Schmelze, so dass die Temperatur 80 °C nicht überstieg. Dann wurden 49,5 g Methoxypolyethylenglykol mit einer zahlenmittleren Molmasse von 750 g/mol zugesetzt und es wurde bei 80 °C gerührt, bis der theoretische Isocyanatgehalt von ca. 6,46 Gew.-% unterschritten wurde. Anschließend gab man 52,2 g 3,5-Dimethylpyrazol (DMP) portionsweise zu der Schmelze, so dass die Temperatur 80 °C nicht überstieg. Es wurde bei 80 °C gerührt, bis IR-spektroskopisch keine Isocyanatgruppen mehr nachweisbar waren. Dann wurden unter starkem Rühren 591 g entionisiertes Wasser zugegeben und es wurde 180 Minuten bei 40 °C nachgerührt.

Die erhaltene Dispersion hatte nachfolgende Eigenschaften:

| | |
|---|---|
| Feststoffgehalt: | ca. 39,0 Gew.-% |
| pH-Wert: | ca. 5,9 |
| Viskosität | ca. 10 mPa·s |
| Mittlere Partikelgröße (LKS): | 129 nm |
| Zetapotential: | -11,9 V |
| Säurezahl: | < 0,2 mg KOH/g |

Die Dispersion war bei Raumtemperatur und bei 40 °C für mindestens 4 Wochen lagerstabil. Es bildete sich in diesem Zeitraum keine Phasentrennung

### Beispiel 4: Methylethylketoxim als Blockierungsmittel

In einer Standard-Rührapparatur wurden 234 g Desmodur^{®} Ultra N 3300 vorgelegt und auf 40 °C aufgeheizt. Anschließend gab man 51,3 g Methylethylketoxim langsam zu der Schmelze, so dass die Temperatur 80 °C nicht überstieg. Dann wurden 61,2 g Methoxypolyethylenglykol mit einer zahlenmittleren Molmasse von 750 g/mol zugesetzt und es wurde bei 80 °C gerührt, bis der theoretische Isocyanatgehalt von ca. 6,41 Gew.-% unterschritten wurde. Anschließend gab man 47,3 g Methylethylketoxim langsam zu der Schmelze, so dass die Temperatur 80 °C nicht überstieg. Es wurde bei 80 °C gerührt, bis IR-spektroskopisch keine Isocyanatgruppen mehr nachweisbar waren. Dann wurden unter starkem Rühren 520 g entionisiertes Wasser zugegeben und es wurde 180 Minuten bei 40 °C nachgerührt, dabei wurde mit weiteren ca. 100 g Wasser verdünnt.

Die erhaltene Dispersion hatte nachfolgende Eigenschaften:

| | |
|---|---|
| Feststoffgehalt: | ca. 34,4% |
| pH-Wert: | ca. 5,7 |
| Viskosität: | ca. 30 mPa·s |
| Mittlere Partikelgröße (LKS): | 47 nm |

Die Dispersion war bei Raumtemperatur und bei 40 °C für mindestens 4 Wochen lagerstabil. Es bildete sich in diesem Zeitraum keine Phasentrennung

### Beispiel 5: Caprolactam als Blockierungsmittel

In einer Standard-Rührapparatur wurden 234 g Desmodur^{®} Ultra N 3300 vorgelegt und auf 40 °C aufgeheizt. Anschließend gab man 68,3 g Caprolactam zu der Schmelze, so dass die Temperatur 80 °C nicht überstieg. Dann wurden 51,9 g Methoxypolyethylenglykol mit einer zahlenmittleren Molmasse von 750 g/mol zugesetzt und es wurde bei 80 °C gerührt bis der theoretische Isocyanatgehalt von ca. 6,26 Gew.-% unterschritten wurde. Anschließend gab man 61,5 g Caprolactam zu der Schmelze, so dass die Temperatur 80 °C nicht überstieg. Es wurde bei 80 °C gerührt, IR-spektroskopisch keine Isocyanatgruppen mehr nachweisbar waren. Dann wurden unter starkem Rühren 624 g entionisiertes Wasser zugegeben und es wurde 180 Minuten bei 40 °C nachgerührt.

Die erhaltene Dispersion hatte nachfolgende Eigenschaften:

| | |
|---|---|
| Feststoffgehalt: | ca. 39 Gew.-% |
| pH-Wert: | ca. 5,8 |
| Viskosität: | ca. 20 mPa·s |
| Mittlere Partikelgröße (LKS): | 92 nm |

Die Dispersion war bei Raumtemperatur und bei 40 °C für mindestens 4 Wochen lagerstabil. Es bildete sich in diesem Zeitraum keine Phasentrennung.

## Patentansprüche

1. Verfahren zur Herstellung mindestens eines blockierten Polyisocyanats, umfassend die folgenden Schritte
(A) Umsetzen mindestens eines Polyisocyanats mit mindestens einem thermisch abspaltbaren Blockierungsmittel ausgewählt aus der Gruppe bestehend aus 1H-Pyrazolen, Lactamen, Ketoximen, Aminen, bzw. deren Gemische, um mindestens ein teilweise blockiertes Polyisocyanat zu erhalten,
(B) Umsetzen des mindestens einen teilweise blockierten Polyisocyanats aus Schritt (A) mit mindestens einem nichtionischen Hydrophilierungsmittel, um ein Zwischenprodukt zu erhalten,
(C) Umsetzen des in Schritt (B) erhaltenen Zwischenprodukts mit mindestens einem thermisch abspaltbaren Blockierungsmittel ausgewählt aus der Gruppe bestehend aus 1H-Pyrazolen, Lactamen, Ketoximen, Aminen, bzw. deren Gemische, um das mindestens eine blockierte Polyisocyanat zu erhalten.
(D) Dispergieren des in Schritt (C) erhaltenen mindestens einen blockierten Polyisocyanats in Wasser.

2. Verfahren nach Anspruch 1, **dadurch gekennzeichnet, dass** als Polyisocyanat die höhermolekularen Verbindungen mit lsocyanurat-, Urethan-, Allophanat-, Biuret-, lminooxadiazintrion-, Oxadiazintrion- und/oder Uretdiongruppen auf Basis aliphatischer und/oder cycloaliphatischer Diisocyanate eingesetzt werden.

3. Verfahren nach Anspruch 2, **dadurch gekennzeichnet, dass** die höhermolekularen Verbindungen mit Biuret-, lminooxadiazindion-, lsocyanurat- und/oder Uretdiongruppen auf Basis von Hexamethylendiisocyanat, Isophorondiisocyanat und/oder 4,4'-Diisocyanatodicyclohexylmethan eingesetzt werden.

4. Verfahren nach einem der Ansprüche 1 bis 3, **dadurch gekennzeichnet, dass** das in Schritt (A) eingesetzte mindestens eine thermisch abspaltbare Blockierungsmittel und das in Schritt (C) eingesetzte mindestens eine thermisch abspaltbare Blockierungsmittel identisch sind.

5. Verfahren nach einem der Ansprüche 1 bis 4, **dadurch gekennzeichnet, dass** das mindestens eine nichtionische Hydrophilierungsmittel mindestens ein Polyoxyalkylenether, enthaltend mindestens eine Hydroxy- oder Aminogruppe, ist.

6. Verfahren nach einem der Ansprüche 1 bis 5, **dadurch gekennzeichnet, dass** das blockierte Polyisocyanat in wässriger Dispersion eine mittlere Partikelgröße von 10 bis 400 nm, besonders bevorzugt 20 bis 200 nm, jeweils bestimmt mittels Laserkorrelations-Spektroskopie nach Verdünnung der Probe mit entmineralisiertem Wasser, aufweist.

7. Blockiertes Polyisocyanat, erhältlich nach einem Verfahren gemäß einem der Ansprüche 1 bis 6.

8. Polyisocyanat nach Anspruch 7, **dadurch gekennzeichnet, dass** es eine Säurezahl, bestimmt wie in der Beschreibung beschrieben, unter 30 mg KOH/g aufweist.

9. Verwendung des blockierten Polyisocyanats nach einem der Ansprüche 7 bis 8 zur Herstellung von Beschichtungsmitteln, Klebstoffen, Dichtstoffen oder Elastomeren.

10. Beschichtungsmittel, Klebstoff, Dichtungsstoff oder Elastomer enthaltend mindestens ein blockiertes Polyisocyanat erhältlich nach einem Verfahren gemäß einem der Ansprüche 1 bis 6 oder gemäß einem der Ansprüche 7 bis 8.

11. Substrate versehen mit Beschichtungen erhältlich unter Verwendung des mindestens einen blockierten Polyisocyanats erhältlich nach einem Verfahren gemäß einem der Ansprüche 1 bis 6 oder gemäß einem der Ansprüche 7 bis 8.

## Claims

1. Process for preparing at least one blocked polyisocyanate, comprising the following steps:
(A) reacting at least one polyisocyanate with at least one thermally eliminatable blocking agent selected from the group consisting of 1H-pyrazoles, lactams, ketoximes, amines, or mixtures thereof, in order to obtain at least one partly blocked polyisocyanate,
(B) reacting the at least one partly blocked polyisocyanate from step (A) with at least one nonionic hydrophilizing agent in order to obtain an intermediate,
(C) reacting the intermediate obtained in step (B) with at least one thermally eliminatable blocking agent selected from the group consisting of 1H-pyrazoles, lactams, ketoximes, amines, or mixtures thereof, in order to obtain the at least one blocked polyisocyanate,
(D) dispersing the at least one blocked polyisocyanate obtained in step (C) in water.

2. Process according to Claim 1, **characterized in that** polyisocyanates used are the compounds of relatively high molecular weight that have isocyanurate, urethane, allophanate, biuret, iminooxadiazinetrione, oxadiazinetrione and/or uretdione groups and are based on aliphatic and/or cycloaliphatic diisocyanates.

3. Process according to Claim 2, **characterized in that** the compounds of relatively high molecular weight that have biuret, iminooxadiazinedione, isocyanurate and/or uretdione groups and are based on hexamethylenediamine diisocyanate, isophorone diisocyanate and/or 4,4'-diisocyanatodicyclohexylmethane are used.

4. Process according to any of Claims 1 to 3, **characterized in that** the at least one thermally eliminatable blocking agent used in step (A) and the at least one thermally eliminatable blocking agent used in step (C) are identical.

5. Process according to any of Claims 1 to 4, **characterized in that** the at least one nonionic hydrophilizing agent is at least one polyoxyalkylene ether containing at least one hydroxyl or amino group.

6. Process according to any of Claims 1 to 5, **characterized in that** the blocked polyisocyanate in aqueous dispersion has an average particle size of 10 to 400 nm, more preferably 20 to 200 nm, determined in each case by means of laser correlation spectroscopy after dilution of the sample with demineralized water.

7. Blocked polyisocyanate obtainable by a process according to any of Claims 1 to 6.

8. Polyisocyanate according to Claim 7, **characterized in that** it has an acid number, determined as described in the description, below 30 mg KOH/g.

9. Use of the blocked polyisocyanate according to any of Claims 7 to 8 for production of coating compositions, adhesives, sealants or elastomers.

10. Coating composition, adhesive, sealant or elastomer comprising at least one blocked polyisocyanate obtainable by a process according to any of Claims 1 to 6, or according to any of Claims 7 to 8.

11. Substrates provided with coatings obtainable using the at least one blocked polyisocyanate obtainable by a process according to any of Claims 1 to 6, or according to any of Claims 7 to 8.

## Revendications

1. Procédé de préparation d'au moins un polyisocyanate bloqué, comprenant les étapes suivantes :
(A) la mise en réaction d'au moins un polyisocyanate avec au moins un agent de blocage thermiquement clivable choisi dans le groupe constitué par des 1H-pyrazoles, des lactames, des cétoximes, des amines, ou leurs mélanges, afin d'obtenir au moins un polyisocyanate partiellement bloqué,
(B) la mise en réaction de l'au moins un polyisocyanate partiellement bloqué de l'étape (A) avec au moins un agent hydrophilisant non ionique pour obtenir un produit intermédiaire,
(C) la mise en réaction du produit intermédiaire obtenu à l'étape (B) avec au moins un agent de blocage thermiquement clivable choisi dans le groupe constitué par des 1H-pyrazoles, des lactames, des cétoximes, des amines, ou leurs mélanges, afin d'obtenir l'au moins un polyisocyanate bloqué,
(D) la dispersion dans de l'eau de l'au moins un polyisocyanate bloqué obtenu à l'étape (C).

2. Procédé selon la revendication 1, **caractérisé en ce qu'**en tant que polyisocyanate, on utilise des composés de masse molaire plus élevée comportant des groupes isocyanurate, uréthane, allophanate, biuret, iminooxadiazinetrione, oxadiazinetrione et/ou urétdione, à base de diisocyanates aliphatiques et/ou cycloaliphatiques.

3. Procédé selon la revendication 2, **caractérisé en ce que** les composés de masse molaire plus élevée comportant des groupes biuret, iminooxadiazindione, isocyanurate et/ou urétdione à base de diisocyanate d'hexaméthylène, de diisocyanate d'isophorone et/ou de 4,4'-diisocyanatodicyclohexylméthane sont utilisés.

4. Procédé selon l'une quelconque des revendications 1 à 3, **caractérisé en ce que** l'au moins un agent de blocage thermoclivable utilisé dans l'étape (A) et l'au moins un agent de blocage thermoclivable utilisé dans l'étape (C) sont identiques.

5. Procédé selon l'une quelconque des revendications 1 à 4, **caractérisé en ce que** l'au moins un agent hydrophilisant non ionique est au moins un éther de polyoxyalkylène contenant au moins un groupe hydroxyle ou amino.

6. Procédé selon l'une quelconque des revendications 1 à 5, **caractérisé en ce que** le polyisocyanate bloqué en dispersion aqueuse présente une taille moyenne de particules de 10 à 400 nm, de manière particulièrement préférée de 20 à 200 nm, déterminée dans chaque cas par spectroscopie de corrélation de photons après dilution de l'échantillon avec de l'eau déminéralisée.

7. Polyisocyanate bloqué, pouvant être obtenu par un procédé selon l'une quelconque des revendications 1 à 6.

8. Polyisocyanate selon la revendication 7, **caractérisé en ce qu'**il présente un indice d'acide, déterminé comme décrit dans la description, inférieur à 30 mg KOH/g.

9. Utilisation du polyisocyanate bloqué selon l'une quelconque des revendications 7 à 8 pour la préparation d'agents de revêtement, d'adhésifs, de matériaux d'étanchéité ou d'élastomères.

10. Agent de revêtement, adhésif, matériau d'étanchéité ou élastomère contenant au moins un polyisocyanate bloqué pouvant être obtenu par un procédé selon l'une quelconque des revendications 1 à 6 ou selon l'une quelconque des revendications 7 à 8.

11. Substrats pourvus de revêtements pouvant être obtenues utilisant l'au moins un polyisocyanate bloqué, pouvant être obtenu par un procédé selon l'une quelconque des revendications 1 à 6 ou selon l'une quelconque des revendications 7 à 8.
